# EUROPÄISCHE PATENTSCHRIFT

(11) **EP 1 349 334 B1**
(45) Veröffentlichungstag und Bekanntmachung des Hinweises auf die Patenterteilung: **22.09.2004**
(21) Anmeldenummer: 02007139.5
(22) Anmeldetag: 28.03.2002
(51) Int. Cl.: H04L 12/64

(54) **Verfahren zur Einstellung eines Jitterpuffers in einem Media Gateway**
Method for adjustment of a Jitter Buffer in a Media Gateway
Methode pour ajuster la mémoire-gigue dans une passerelle de media

(43) Veröffentlichungstag der Anmeldung: 01.10.2003
(73) Patentinhaber: Siemens Schweiz AG, 8047 Zürich (CH)
(72) Erfinder: Goldstein, Peter, 8800 Thalwil (CH)
(74) Vertreter: Kley, Hansjörg

(56) Entgegenhaltungen:
- EP-A- 1 104 958
- WO-A-01/93516
- DE-A- 10 053 065

## Beschreibung

Die vorliegende Erfindung betrifft ein Verfahren zur Einstellung der Jitterpuffergrösse in einem zwischen einem leitungsvermitteltem und einem paketvermittelten Netz eingefügten Media Gateway nach dem Oberbegriff des Patentanspruchs 1 und ein Media Gateway zur Durchführung des Verfahrens gemäss Patentanspruch 7.

Die vorliegende Erfindung betrifft das Gebiet der FAX/Modem-Übermittlung im Sprachband und des Sprachverkehrs über das leitungsvermittelte Netz wie z.B. PSTN und ISDN. Ein leitungsvermitteltes Netz bietet eine sehr hohe Dienstqualität, insbesondere ist die Laufzeit zwischen den Endpunkten (=Teilnehmern/Endgeräte) konstant. Die Netzbetreiber setzen im sogenannten Backbone-Netz zunehmend auch für Echtzeitanwendungen, z.B. Sprache bzw. Daten im Sprachband, ein paketvermitteltes Netz ein. Im folgenden wird zur Vermeidung von Unklarheiten dort wo erforderlich die englisch-sprachige Nomenklatur aus den Schriften der ITU (International Telecommunication Union) und der IETF (Internet Engineering Task Force) benutzt.

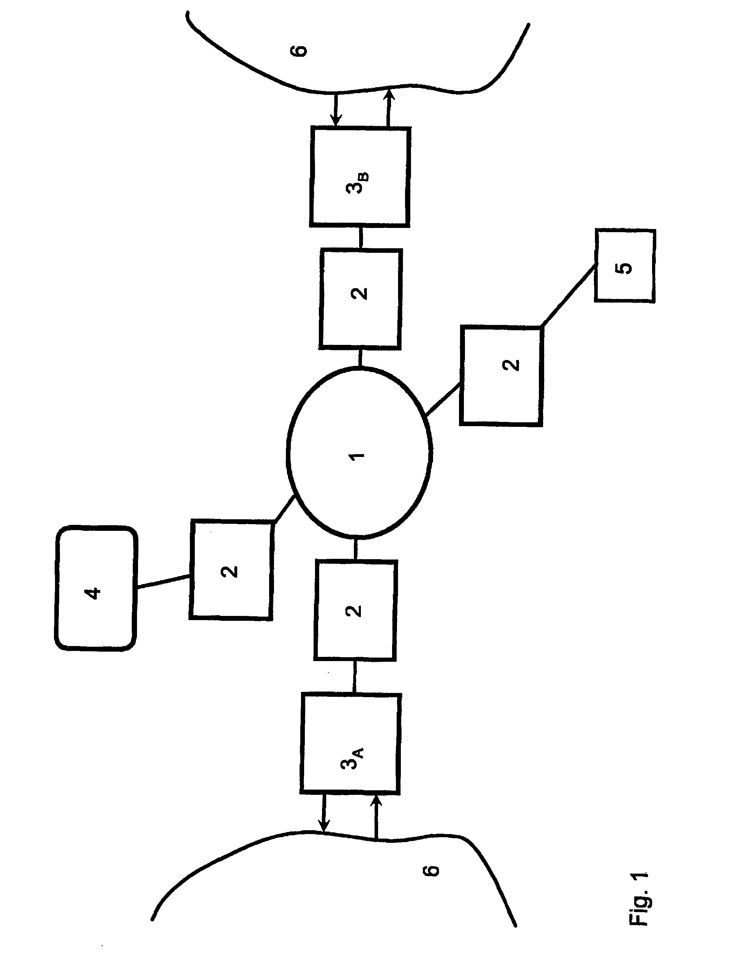

Eine typische Netzkonfiguration zeigt Figur 1. Die Teilnehmer/Endgeräte an einem leitungsvermittelten Netz bzw. Anschlussnetz 6 sind über ein sogenanntes Backbone-Netz 1, das auf dem Internetprotokoll basiert, verbunden. Die Verbindung zwischen "leitungsvermitteltem Netz" und "paketvermitteltem Netz" wird für die Nutzinformation (z.B. Sprache, Fax/Modem)durch sogenannte Media Gateways 3_{A}, 3_{B} realisiert. Dadurch, dass ein Teil einer "leitungsver-mittelten" Übertragungsstrecke mit einem paketvermittelten Netz realisiert wird, ist die Verzögerung zwischen den Endpunkten nicht mehr konstant, da die Datenpakete unterschiedliche Wege nehmen können und in den Netzelementen (z.B.

Router) durch Warteschlangensysteme abgearbeitet werden und demzufolge unterschiedliche Laufzeiten aufweisen. Mit einem Jitterpuffer in den Media Gateways wird die Variabilität der Ankunftszeit der ankommenden Datenpakete ausgeglichen, für den Sprachdienst wird dabei eine variable Puffergrösse vorgesehen. Dies ist deshalb erforderlich, weil im Sprachdienst die Verzögerung möglichst klein gehalten werden soll, so dass die Puffergrösse dynamisch der momentanen Gegebenheit angepasst werden kann. Demgegenüber sind für den Datendienst, d.h. Fax- oder Modem-Dienste im Sprachband, die Verzögerungen relativ unkritisch, dafür sind Datenverluste möglichst auszuschliessen. Dazu wird eine feste, aber höhere Puffergrösse vorgesehen. Dies in der Hoffnung, dass für jedes ankommende Paket noch Platz im Puffer vorhanden ist. Da in der Regel der Media Gateway Controller über die Signalisierung keine genaue Angabe bezüglich der Art der Nutzinformation (Sprache bzw. Daten im Sprachband) erhält, erfolgt in diesen Fällen eine Voreinstellung des Media Gateways auf Sprache (d.h. z.B. variabler Jitterpuffer). Aus den vorgenannten Gründen erfolgt für den Datenverkehr eine Umschaltung zu einer festen Puffergrösse. Die Umschaltung wird von einem Ton-Detektor oder einer Tondetektionsfunktion 10 im Sende-Pfad des Media Gateways 3_{B} der B-Seite (dem gerufenen Teilnehmer/Endgerät zugewandt) initiiert. Dabei erfolgt dies mit einer Meldung an den Media Gateway Controller, von dem aus wiederum das Media Gateway auf der A-Seite (dem rufenden Teilnehmer/Endgerät zugewandt) zu einer Umschaltung der Puffergrösse veranlasst wird. Diese Umschaltung impliziert allerdings das Problem, dass dabei im zu übertragenden Signal ein Phasensprung und/oder eine Signalpause vorgetäuscht wird. So kann beispielsweise ein Echokompensator den Disabling Ton für Echosperren (2100 Hz continuous) als Disabling Ton für Echosperren und Echokompensatoren (2100Hz mit Phasensprung) interpretieren oder ein Endgerät kann die Signalpause in einem Signal als Uebertragungsfehler bewerten. Für die Übertragungsverfahren wie QAM (Quadrature Amplitude Modulation) werden digitale Signale durch eine Kombination aus vier Phasen und vier Amplituden dargestellt. Eine Verzerrung durch die Umschaltung auf eine feste Puffergrösse bewirkt notwendigerweise eine Störung oder Verfälschung der übertragenen Information.

In der Veröffentlichsschrift DE 100 53 065 A1 (Siemens Information and Communication Networks, Inc. Boca Raton) ist ein Verfahren für adaptive Jitterpuffer offenbart, bei dem die Jitterpuffergrösse dynamisch eingestellt wird und zwar gemäss dem jeweiligen Jitter der aktuellen Sequenz. Die Inhalte des Jitterpuffers werden während einer Verbindung geprüft. Falls die Verzögerung oder die mittlere Verzögerung im Puffer auf einen vorherbetimmten Schwellwert absinkt, wird die Grösse des Jitterpuffers erhöht.

In der Patentschrift EP 0 577 269 B1 (AT&T Corp) sind ein Verfahren und eine Anordnung offenbart, bei denen Datenpakete mit Prioritätsattributen übermittelt werden, typischerweise mit dem Verfahren ATM (Asynchronous Transfer Mode). Abhängig von einer Vielzahl gleich priorisierter Verbindungen entsteht dadurch ebenfalls das Phänomen des Jitters. Um diesen bei Echtzeitanwendungen wie z.B. Sprache oder Video zu reduzieren, wird eine Tabelle vorgeschlagen, in der abhängig von der Priorität eine weitere Priorität vergeben wird, um einen relativen "Worst Case Jitter" zu garantieren.

Für eine auf dem Internet Protokoll basierende Übertragung ist der Mechanismus der Prioritätsvergabe erst mit der Version IP V6 implementiert. Darüber hinaus wäre dies nicht anwendbar, weil dadurch ein bedeutender Signalisierungsverkehr betreffend der Prioritätenzuordnung zwischen Media Gateway Controller und den zugeordneten Media Gateways zur entstehen würde und der Jitter auch allein durch unterschiedliche Wege und Füllstände der Warteschlangen entstehen kann. Eine mit IPv4 (Diffserv, Intserv) mögliche Priorisierung bewirkt nur eine bevorzugte Behandlung der priorisierten Pakete. Dies hilft nur dann, wenn Pakete mit unterschiedlichen Prioritäten anstehen.

Der vorliegenden Erfindung liegt daher die Aufgabe zugrunde, ein Verfahren und ein Media Gateway anzugeben, das die Störeffekte auf Ein- und Mehrfrequenzsignale, hervorgerufen durch eine Pufferspeichermanipulation beim Wechsel von Sprache zu Daten im Sprachband vermeidet.

Diese Aufgabe wird erfindungsgemäss durch das im Patentanspruch 1 angegebene Verfahren und durch den in Patentanspruch 7 angegebenen Media Gateway gelöst.

Vorteilhafte Ausgestaltungen der Erfindung sind in weiteren Ansprüchen angegeben.

Gemäss dem erfindungsgemässen Verfahrens, wonach für jede Verbindung in Richtung leitungsvermitteltem Netz mit einer weiteren Tondetektionsfunktion Töne detektiert werden, so dass abhängig vom festgestellten Dienst über die Steuerung eine Einstellung der Jitterpuffergrösse vorgenommen wird; kann eine Jitterpufferspeichermanipulation beim Wechsel vom Sprachdienst zum Datendienst (im Sprachband) in Echtzeit vorgenommen werden, ohne dass erstens ein Störeffekt im zu übertragenden Signal auftritt und ohne dass zweitens der Media Gateway Controller diese Manipulation, die dann nicht in Echtzeit erfolgen könnte, initiieren muss.
i) Dadurch dass
   die weitere Tondetektionsfunktion ein Ton-Disabling einer im Media Gateway integrierten Echounterdrückungsfunktion zur Ausschaltung einer externen Echounterdrückung anzeigt;
   kann eine durch zwei aktivierte Echounterdrückungsfunktionen (zweite Echounterdrückungsfunktion im Modem) verursachte Qualitätsverschlechterung in der Übertragung vermieden werden (Patentanspruch 2).
ii) Dadurch dass
   die Steuerung entweder von einem Media Gateway Controller oder von der Tondetektionsfunktion in Richtung paketvermitteltem Netz eine Voreinstellung der Jitterpuffergrösse für den Datendienst im Sprachband vornimmt;
   können Störungen im Informationsaustausch der Endgeräte zu Beginn einer Verbindung unabhängig vom tatsächlich festgestellten Dienst ausgeschlossen werden (Patentanspruch 4).

Ein Ausführungsbeispiel der Erfindung wird nachfolgend anhand der Zeichnungen näher erläutert. Dabei zeigen:
- Figur 1: Netzszenario mit einem paketvermittelten Backbone-Netz;
- Figur 2: Blockschaltbild eines erfindungsgemässen Media Gateways.

Wie bereits ausgeführt, zeigt Figur 1 ein Netzszenario mit einem paketvermittelten Netz 1 als Backbone eines leitungsvermittelten Netzes bzw. Anschlussnetzes 6. Das leitungsvermittelte Netz 6 wird im folgenden alternativ zum Bezugszeichen 6 mit TDM oder TDM-Netz bezeichnet. Für einen Teilnehmer am TDM-Netz ist dabei nicht sichtbar, dass für eine bestimmte Verbindung zu einem anderen Teilnehmer dazwischen als Transportnetz bzw. als Backbone-Netze ein Paketnetz 1 eingefügt ist. Dieses Paketnetz 1 kann z.B. als ATM-Backbone-Netz oder als IP (over ATM)-Backbone-Netz ausgeführt sein. Für die weitere Erläuterung der vorliegenden Erfindung wird angenommen, dass der A-Teilnehmer, sich auf der linken Seite von Figur 1 befindet. Demzufolge ist das Media Gateway auf Seite des A-Teilnehmers mit dem Bezugszeichen 3_{A} versehen und entsprechend auf der Seite des B-Teilnehmers ist das Media Gateway mit dem Bezugszeichen 3B bezeichnet. Die Übertragungsrichtungen sind mit Pfeilen versehen. Die Media Gateways 3_{A}, 3_{B} werden von einem gemeinsamen oder zwei separaten, zugeordneten Media Gateway Controller(n) 4 gesteuert, in Figur 1 setzt sich das Backbone-Netz aus Edge Router 2, der eine Schnittstellenanpassung zwischen der Schnittstelle (z.B. Ethernet) des Media Gateways und Media Gateway Controllers einerseits und der Schnittstelle des Core Routers andererseits vornimmt, und einer Anzahl Core Router, symbolisiert als Transportnetz 1, zusammen. Der in Fig. 1 mit dem Bezugszeichen 5 dargestellte H.323- oder SIP-Teilnehmer kann auch direkt an das vorgenannte Backbone-Netz angeschaltet sein, ein Edge Router 2 ist nicht zwingend.

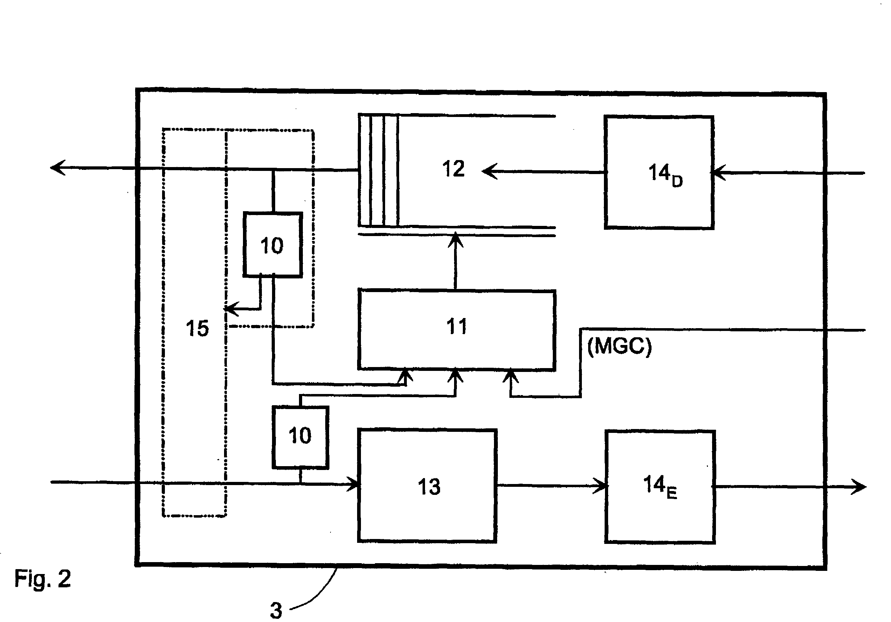

Figur 2 zeigt ein Blockschaltbild eines erfindungsgemässen Media Gateways 3. Die Sprachaktivitätserkennung 13 ist für eine optimale Nutzung der Bandbreite im Paketnetz 1 vorgesehen. Dazu wird der Real Time Protocol Encoder 14_{E} angewiesen, bei Sprachpausen keine Nutzpakete sondern ein Steuerpaket mit dem Inhalt "Comfort Noise" zu senden, so dass auf der anderen Seite (A- oder B-Seite) ein entsprechendes Signal als "Rosa-Rauschen" erzeugt wird, so dass der Hörende nicht den Eindruck hat, die Verbindung sei unterbrochen. Die Sprachaktivitätserkennung erzeugt eine solche Information aufgrund eines anhaltend tiefen Pegels, z.B. < 31 dBm0. Für die Erläuterung wird angenommen, dass es sich um das Media Gateway 3_{A} auf Seite eines A-Teilnehmers handelt. Die Media Gateways 3_{A}. und 3_{B} sind jedoch vorzugsweise mit identischen Funktionen ausgeführt. Im Media Gateway 3_{A} ist auf der Seite TDM für von dieser Seite entstammende Verbindungen ein Ton-Detektor 10 angeordnet, der aufgrund eines bestimmten Einoder Mehrfrequenzsignals eine Fax- oder Modem-Übermittlung von einer Sprachübermittlung unterscheiden kann. Im folgenden werden Fax- und Modemdienste unter dem Begriff "Datendienstu" bzw. dort wo erforderlich unter dem Begriff "Datendienst im Sprachband" subsummiert. Aufgrund dieser Unterscheidung wird gemäss dem Stand der Technik eine Einstellung der Jitterpuffergrösse wie folgt vorgenommen.
Sprachdienst:
   variable Puffergrösse;
Datendienst im Sprachband:
   feste, aber relativ hohe Puffergrösse.

Ebenfalls dem Stand der Technik würde es entsprechen, wenn die dienstbezogene Einstellung der Jitterpuffergrösse vom Media Gateway Controller her veranlasst würde. Dies ist in der Figur 2 mit der Verbindung MGC dargestellt. Da bei Fax-/Modem-Verbindungen unter Umständen die Kommunikation mit einem Signal beginnt, das von B nach A läuft - obwohl der Verbindungswunsch von A initiiert wurde! - muss eine weitere Tondetektionsfunktion 10 vorgesehen werden, die in Richtung TDM angeordnet ist. Vorzugsweise ist diese weitere Tondetektionsfunktion 10 in Richtung TDM-Netz anschliessend an den Jitterpuffer angeordnet. Erfindungsgemäss wird nun eine solche Tondetektionsfunktion 10 benutzt, um die Jitterpuffergrösse in Richtung leitungsvermitteltem Netz bzw. Anschlussnetz abhängig vom festgestellten Dienst einzustellen. Die Einstellung selber erfolgt identisch wie vorstehend aufgeführt zum Sprachdienst bzw. zum Datendienst im Sprachband. Darüber hinaus wird in einer bevorzugten Weiterentwicklung der Erfindung mit dieser weiteren Tondetektionsfunktion 10 auch der Disabling-Ton erkannt und einer zusätzlich im Media Gateway 3 integrierten Echounterdrückung 15 angezeigt. Diese Echounterdrückung 15, die generisch gemäss ITU-T Rec. G.164 als Echosperre spezifiziert ist, weist eine Echokompensation gemäss den ITU-T Recs. G.165 oder G.168 auf. Die Funktion des integrierten Tone Disabler besteht darin, aufgrund eines detektierten Disabling Tons den aktivierten Echokompensator 15 für die Dauer einer FAX-/Modemverbindung auszuschalten. Nach Abschluss der vorgenannten FAX-/Modemverbindung nimmt die Echounterdrückungsfunktion 15 wieder den ursprünglichen Zustand (enabled bzw. disabled) ein. Die Echounterdrückungsfunktion 15 können abhängig von der Implementierung permanent den Verbindungen (Zeitschlitzen) zugeordnet sein oder aus einem Pool den Verbindungen dynamisch zugewiesen werden. Die in Figur 2 dargestellte Tondetektionsfunktion 10 ist vorzugsweise nur einmal implementiert und wird dynamisch mit einer je eigenen Laufzeitumgebung (Prozess) und eigenem Stack entsprechend dem Verkehrsaufkommen mehrfach aufgerufen. Dies erlaubt eine besonders vorteilhafte Ausführung der vorliegenden Erfindung, da eine Tondetektionsfunktion 10 in einem Media Gateway ohnehin schon vorhanden ist.

Die Verbindung der Tondetektionsfunktion 10 mit einer Steuerung 11 für die Jitterpuffergrösse setzt diese auf einen vorbestimmten Wert durch die Tondetektionsfunktion 10. Die Steuerung 11 ermöglicht nach wie vor den Media Gateway Controller (vgl. Bezugszeichen MGC in der Fig. 2) die Jitterpuffergrösse einzustellen in der Richtung TDM → Paketnetz. Dieser Wert sollte so gross gewählt werden, dass kein Paketverlust aufgrund einer zu kleiner Jitterpuffergrösse auftritt. Erfindungsgemäss erfolgt nun in der Richtung Paketnetz → TMD eine Einstellung der Jitterpuffergrösse aufgrund eines festgestellten Dienstes im Sprachband gemäss der vorgenannten Richtung. Für die beiden Dienste sind im einzelnen folgende vorgesehen:

### 1 Sprachdienst

Für den Sprachdienst ist eine minimale Verzögerung unabdingbar. Dazu wird in der Einheit 14_{D} der Jitter gemessen und gegenüber festgestellten Paketverlusten eine minimale Jitterpuffergrösse vorgegeben. Die Einheit 14_{D} umfasst auf der gleichen Schicht die Funktion Real-Time Transport Protocol RTP zusammen mit Real-Time Control Protocol RTCP. Die Einheit 14_{D} bietet Dienste an wie z.B. Paketverlustdetektion, Identifikation des Inhaltes der Pakete, Anordnung der ankommenden Pakete in der ursprünglich abgesandten Reihenfolge. Sprachsignale sind in kleinen Zeiteinheiten betrachtet meist stationär. Deshalb haben eine stetige Veränderung/Verkleinerung der Jitterpuffergrösse und ein Algorithmus zum Ausgleich von verlorenen Paketen keinen signifikant negativen Einfluss auf die Sprachqualität.

### 2 Datendienst im Sprachband

Für den Datendienst im Sprachband ist, u.a. wegen des "burstartigen" Datenverkehrs, die Verzögerung ist weniger kritisch als ein Paketverlust. Dies hat zur Konsequenz, dass die Toncharakteristik davon möglichst unbeeinflusst sein sollte. Demzufolge muss die Tondetektionsfunktion 10 in der Lage sein, allfällig auftretende Phasensprünge in einem Tonsignal gleicher Frequenz (z.B. 2100 Hz mit oder ohne Phasensprung) zu detektieren. Wenn die Tondetektionsfunktion 10 in der Richtung TDM → Paketnetz 1 einen Fax-/Modemdienst im Sprachband feststellt, wird der Jitterpuffer in der Richtung Paketnetz 1 → TDM zum eingangs genannten genügend grossen festen Wert eingestellt. Dies erlaubt der Tondetektionsfunktion 10 in der Richtung Paketnetz 1 → TDM alle Töne zu detektieren und die Anzeige für das Ton Disabling der Echounterdrückungsfunktion 15 korrekt vorzunehmen.

### Liste der verwendeten Bezugszeichen

- 1: Transportnetz, , auf dem Internet Protokoll basierend, auch IP-Backbone genannt
- 2: Edge Router, leistet Verbindung zwischen Media Gateway und Media Gateway Controller einerseits und den Einrichtungen des Transportnetz andererseits
- 3, 3_{A}, 3_{B}: Media Gateway, Media Gateway auf Seite A- bzw. B-Teilnehmer
- 4: Media Gateway Controller
- 5: H. 323-Teilnehmer, SIP-Teilnehmer
- 6: Anschluss- bzw. Leitungsvermitteltes Netz PSTN/ISDN, TDM-Netz
- 10: Ton-Detektor, Tondetektionsfunktion
- 11: Steuerung Jitterpuffergrösse
- 12: Jitterpuffer
- 13: Sprachaktivitätserkennung, Voice Activity Detection VAD
- 14_{D}: Real Time Protocol decoder; RTP_{D}
- 14_{E}: Real Time Protocol encoder; RTP_{E}
- 15: Interne Echounterdrückungsfunktion

### Liste der verwendeten Abkürzungen

- IP: Internet Protocol
- ISDN: Integrated Services Digital Network
- PSTN: Public Switched Telecommunication Network
- ATM: Asynchronous Transfer Mode
IP over ATM
- TDM: Time Division Multiplex
- ITU: International Telecommunication Union
- ITU-T: Telecommunication Standardization Sector of ITU

### Literaturverzeichnis

- G.164: Apparatus associated with long-distance Telephone circuits and other terminal Equipments Echo Suppressors © ITU 1988, 1993
- G.165: General characteristics of international telephone connections and international telephone circuits Echo Cancellers (03/1993)
- G.168: International telephone connections and circuits Apparatus associated with long distance telephone circuits Digital network echo cancellers April 2000

## Patentansprüche

1. Verfahren zur Einstellung der Jitterpuffergrösse in einem zwischen einem leitungsvermitteltem (6) und einem paketvermittelten Netz (1) eingefügten Media Gateway (3_{A}, 3_{B}), wobei über das Media Gateway (3_{A}, 3_{B}) Sprachdienste und Datendienste im Sprachband geführt werden und das Media Gateway (3_{A}, 3_{B}) einen Jitterpuffer (12) aufweist und mit einer Tondetektionsfunktion (10) Töne im Sprachband detektiert werden, so dass für jede Verbindung in Richtung paketvermitteltem Netz (1) mit einer Steuerung (11) die Einstellung der Jitterpuffergrösse vorgenommen wird,
**dadurch gekennzeichnet, dass**
für jede Verbindung in Richtung leitungsvermitteltem Netz (6) mit einer weiteren Tondetektionsfunktion (10) Töne detektiert werden, so dass abhängig vom festgestellten Dienst über die Steuerung (11) eine Einstellung der Jitterpuffergrösse vorgenommen wird.

2. Verfahren nach Anspruch 1,
**dadurch gekennzeichnet, dass**
die weitere Tondetektionsfunktion (10) ein Ton-Disabling einer im Media Gateway (3_{A}, 3_{B}) integrierten Echounterdrückungsfunktion (15) anzeigt.

3. Verfahren nach Anspruch 1 oder 2,
**dadurch gekennzeichnet, dass**
die weitere Tondetektionsfunktion (10) für den Sprachdienst eine variable und für den FAX-/Modemdienst eine feste Jitterpuffergrösse einstellt.

4. Verfahren nach einem der Ansprüche 1 bis 3,
**dadurch gekennzeichnet, dass**
die Steuerung (11) entweder von einem Media Gateway Controller oder von der Tondetektionsfunktion (10) in Richtung paketvermitteltem Netz eine Voreinstellung der Jitterpuffergrösse für den Datendienst im Sprachband vornimmt.

5. Verfahren nach einem der Ansprüche 1 bis 4,
**dadurch gekennzeichnet, dass**
die weitere Tondetektionsfunktion (10) zwischen dem Jitterpuffer (12) und dem leitungsvermittelten Netz (6) angeordnet ist.

6. Verfahren nach Anspruch 5,
**dadurch gekennzeichnet, dass**
dem Jitterpuffer (12) auf der Seite des paketvermittelten Netzes (1) ein Real Time Protocol decoder (14_{D}) vorgeschaltet ist, in dem der Jitter gemessen und gegenüber festgestellten Paketverlusten eine minimale Jitterpuffergrösse vorgegeben wird.

7. Media Gateway (3_{A}, 3_{B}), das zwischen einem leitungsvermitteltem Netz (6) und einem paketvermittelten Netz (1) eingefügt ist, mit Mitteln zur Durchführung der Verfahrensschritte gemäss einem der Patentansprüche 1 bis 6.

## Claims

1. Method for setting the jitter buffer size in a media gateway (3_{A}, 3_{B}) inserted between a circuit-switched (6) and a packet-switched network (1), wherein voice services and data services are routed in the voice band via the media gateway (3_{A}, 3_{B}) and the media gateway (3_{A}, 3_{B}) has a jitter buffer (12) and tones are detected in the voice band by means of a tone detection function (10) so that the setting of the jitter buffer size is performed for each connection in the direction of the packet-switched network (1) by means of a controller (11),
**characterised in that**
tones are detected by means of a further tone detection function (10) for each connection in the direction of the circuit-switched network (6) so that a setting of the jitter buffer size is performed via the controller (11) as a function of the detected service.

2. Method according to Claim 1,
**characterised in that**
the further tone detection function (10) indicates a tone disabling of an echo suppression function (15) integrated in the media gateway (3_{A}, 3_{B}).

3. Method according to Claim 1 or 2,
**characterised in that**
the further tone detection function (10) sets a variable jitter buffer size for the voice service and a fixed jitter buffer size for the fax/modem service.

4. Method according to one of Claims 1 to 3,
**characterised in that**
the controller (11) either of a media gateway controller or of the tone detection function (10) performs a presetting of the jitter buffer size for the data service in the voice band in the direction of the packet-switched network.

5. Method according to one of Claims 1 to 4,
**characterised in that**
the further tone detection function (10) is disposed between the jitter buffer (12) and the circuit-switched network (6).

6. Method according to Claim 5,
**characterised in that**
a Real Time Protocol decoder (14_{D}) is connected upstream of the jitter buffer (12) on the side of the packet-switched network (1), in which decoder the jitter is measured and a minimum jitter buffer size is predefined relative to detected packet losses.

7. Media gateway (3_{A}, 3_{B}) which is inserted between a circuit-switched network (1) and a packet-switched network (1), having means for performing the method steps according to one of Claims 1 to 6.

## Revendications

1. Procédé pour régler la grandeur de mémoire tampon de gigue dans une passerelle de média (3_{A}, 3_{B}) insérée entre un réseau à ,commutation de circuits (6) et un réseau à commutation de paquets (1), des services de phonie et des services de données passant dans la bande vocale par l'intermédiaire de la passerelle de média (3_{A}, 3_{B}) et la passerelle de média (3_{A}, 3_{B}) comportant une mémoire tampon de gigue (12) et des tonalités étant détectées dans la bande vocale avec une fonction de détection de tonalité (10) de telle sorte que, pour chaque liaison en direction du réseau à commutation de paquets (1), le réglage de la grandeur de mémoire tampon de gigue est effectué avec une commande (11),
**caractérisé par le fait que**, pour chaque liaison en direction du réseau à commutation de circuits (6), on détecte des tonalités avec une autre fonction de détection de tonalité (10) de manière à effectuer un réglage de la grandeur de tampon de gigue via la commande (11) en fonction du service constaté.

2. Procédé selon la revendication 1,
**caractérisé par le fait que** l'autre fonction de détection de tonalité (10) indique une neutralisation de tonalité d'une fonction de suppression d'écho (15) intégrée dans la passerelle de média (3_{A}, 3_{B}).

3. Procédé selon la revendication 1 ou 2,
**caractérisé par le fait que** l'autre fonction de détection de tonalité (10) règle une grandeur de mémoire tampon de gigue variable pour le service de phonie et une grandeur de mémoire tampon de gigue fixe pour le service fax / modem.

4. Procédé selon l'une des revendications 1 à 3,
**caractérisé par le fait que** la commande (11) soit par un contrôleur de passerelle de média soit par la fonction de détection de tonalité (10) effectue en direction du réseau à commutation de paquets un préréglage de la grandeur de mémoire tampon de gigue pour le service de données dans la bande vocale.

5. Procédé selon l'une des revendications 1 à 4,
**caractérisé par le fait que** l'autre fonction de détection de tonalité (10) est placée entre la mémoire tampon de gigue (12) et le réseau à commutation de circuits (6).

6. Procédé selon la revendication 5,
**caractérisé par le fait qu'**il est prévu du côté amont de la mémoire tampon de gigue (12) du côté du réseau à commutation de paquets (1) un décodeur de protocole en temps réel (14_{D}) dans lequel la gigue est mesurée et une grandeur de mémoire tampon de gigue minimale est prescrite par rapport à des pertes constatées de paquets.

7. Passerelle de média (3_{A}, 3_{B}) qui est insérée entre un réseau à commutation de circuits (6) et un réseau à commutation de paquets (1), avec des moyens pour la mise en oeuvre des étapes du procédé selon l'une des revendications 1 à 6.
